(19) Europäisches Patentamt
European Patent Office
Office européen des brevets

(11) Veröffentlichungsnummer: **0 657 507 A2**

(12) **EUROPÄISCHE PATENTANMELDUNG**

(21) Anmeldenummer: **94118849.2**

(22) Anmeldetag: **30.11.94**

(51) Int. Cl.[6]: **C09B 57/00**, C08K 5/3417

(30) Priorität: **08.12.93 DE 4341769**

(43) Veröffentlichungstag der Anmeldung:
**14.06.95 Patentblatt 95/24**

(84) Benannte Vertragsstaaten:
**CH DE FR GB IT LI**

(71) Anmelder: **BASF AKTIENGESELLSCHAFT**
**D-67056 Ludwigshafen (DE)**

(72) Erfinder: **Krapp, Michael, Dr.**
**Ahornweg 4**
**D-67122 Altrip (DE)**
Erfinder: **Henning, Georg, Dr.**
**Thorwaldsenstrasse 3**
**D-67061 Ludwigshafen (DE)**

(54) **Verfahren zur Herstellung von unsymmetrischen Bisisoindolinpigmenten.**

(57) Herstellung von unsymmetrischen Bisisoindolinpigmenten der allgemeinen Formel I

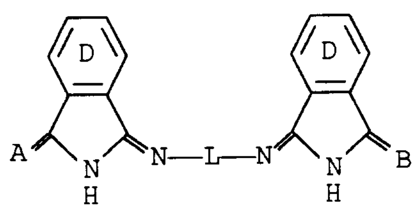

I

in der
A und B Reste verschiedener methylenaktiver Verbindungen, Sauerstoff oder Schwefel bedeuten,
L für einen zweiwertigen Rest oder eine chemische Bindung steht und
die Ringe D gleich oder verschieden und gegebenenfalls substituiert sind,
indem man
a) ein Halbkondensat der Formel IIa

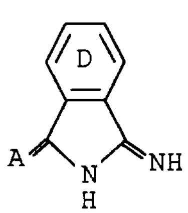

IIa

mit einer Verbindung der Formel III

$H_2N$-L-$NH_2$ III

EP 0 657 507 A2

in einem inerten organischen Lösungsmittel umsetzt und
b) die in Schritt a) erhaltene Verbindung der Formel IV

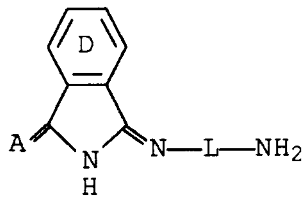

IV

direkt oder nach Isolierung mit einem Halbkondensat der Formel IIb

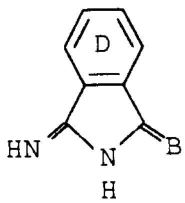

IIb

in Gegenwart einer Säure und gegebenenfalls eines inerten organischen Lösungsmittels umsetzt.

Die vorliegende Erfindung betrifft ein neues Verfahren zur Herstellung von unsymmetrischen Bisisoindolinpigmenten der allgemeinen Formel I

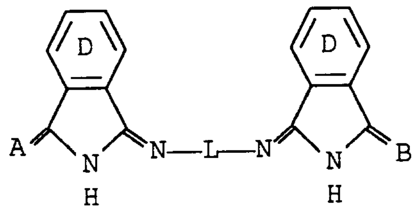

I

in der
A und B Reste verschiedener methylenaktiver Verbindungen, Sauerstoff oder Schwefel bedeuten,
L für einen zweiwertigen Rest oder eine chemische Bindung steht und
die Ringe D gleich oder verschieden und gegebenenfalls substituiert sind.

Außerdem betrifft die Erfindung neue Verbindungen der Formel IV

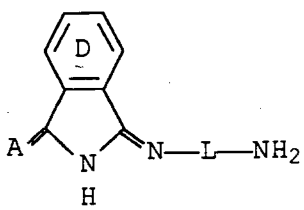

IV

als Zwischenprodukte für die Herstellung der Bisisoindolinpigmente I sowie neue Bisisoindolinpigmente der Formel I'

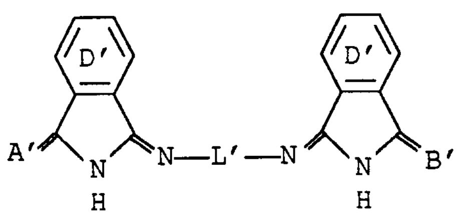

I'

in der die Variablen folgende Bedeutung haben:
A',B' verschiedene Reste der Formel

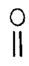, 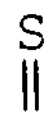, 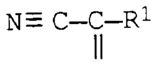, 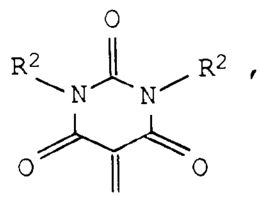, 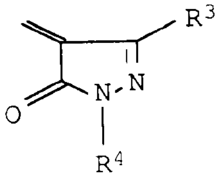,

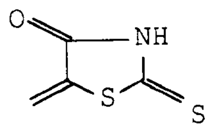, 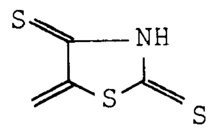, 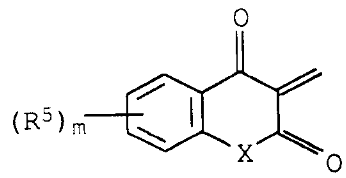,

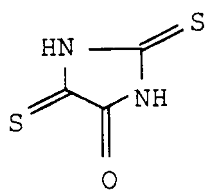, 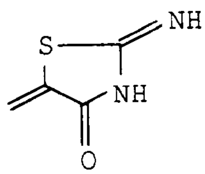, 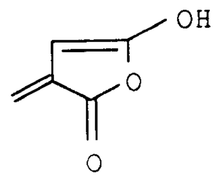,

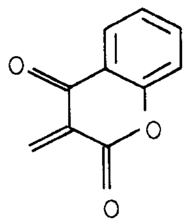, 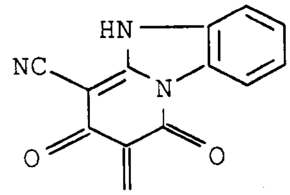,

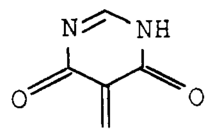 oder 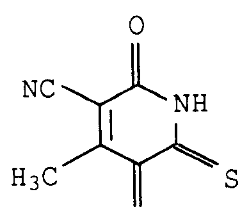

wobei die Variablen folgende Bedeutung haben:

$R^1$ Cyano;

Carbamoyl, das durch

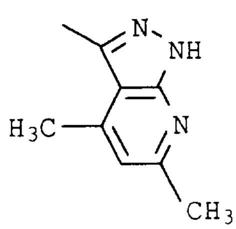

oder 3,3,5,5-Tetramethyl-4-piperidyl, durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-pipe-

ridyl, Phthalimidyl, Carbamoyl, das ein- oder zweifach durch $C_1$-$C_{10}$-Alkyl substituiert sein kann, und/oder Trifluormethyl substituiert sein können;
$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, $C_1$-$C_{10}$-Alkyl, Formylamino, $C_2$-$C_{10}$-Alkanoylamino und/oder Phthalimidyl substituiert sein können;
Phenyl, das durch Halogen, Cyano, Nitro, Sulfo und/oder Trifluormethyl substituiert sein kann;
Carbazoyl oder Ureidocarbonyl, deren endständige Stickstoffatome ein- oder zweifach durch $C_1$-$C_6$-Alkyl oder Benzyl, das die oben genannten Substituenten tragen kann, substituiert sein können; einen heterocyclischen Rest der Formeln

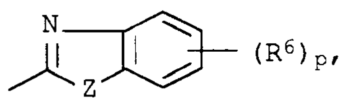

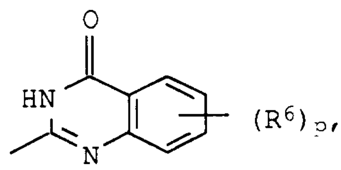

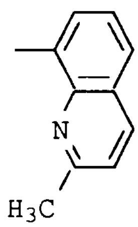

oder

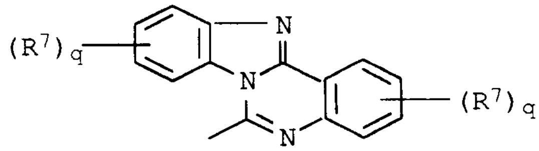

wobei

Z -O-, -S- oder -NH-,
$R^6$ Halogen, Nitro, Sulfo, $C_1$-$C_6$-Alkyl oder $C_1$-$C_6$-Alkoxy,
$R^7$ Halogen,
p 0 bis 2 und
q 1 bis 4
bedeutet;
$R^2$ unabhängig voneinander Wasserstoff, $C_1$-$C_6$-Alkyl, Phenyl oder Naphthyl, das jeweils durch Halogen, Nitro, Sulfo, $C_1$-$C_6$-Alkyl und/oder $C_1$-$C_6$-Alkoxy substituiert sein kann;
$R^3$ $C_1$-$C_6$-Alkyl, Amino, Benzoylamino, Carboxyl, Carbamoyl oder $C_1$-$C_6$-Alkoxycarbonyl;
$R^4$ Wasserstoff oder Phenyl, das bis zu zwei der folgenden Substituenten tragen kann: Halogen, Nitro, Sulfo, Carboxyl, Carbamoyl, $C_1$-$C_6$-Alkyl, $C_1$-$C_6$-Alkoxy oder $C_1$-$C_6$-Alkoxycarbonyl;
$R^5$ Halogen oder Nitro;
X -O- oder -$NR^8$-
wobei $R^8$ Wasserstoff oder $C_1$-$C_6$-Alkyl bedeutet;
m 0 bis 4;
L' eine chemische Bindung;
$C_1$-$C_6$-Alkylen, 1,4- oder 1,3-Phenylen oder 1,5-Naphthylen, wobei Phenylen und Naphthylen durch Halogen, Nitro, Sulfo, $C_1$-$C_6$-Alkyl und/oder $C_1$-$C_6$-Alkoxy substituiert sein können; einen Rest der Formeln

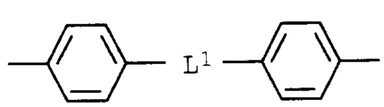

$—CO—NH—L^2—NH—CO—$ , $—NH—CO—L^2—CO—NH—$

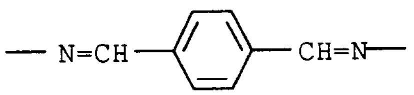 , 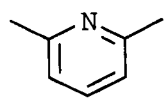

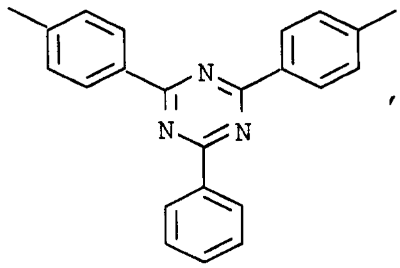 , 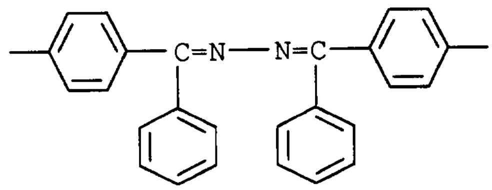

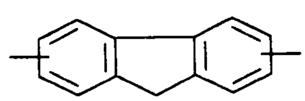 , 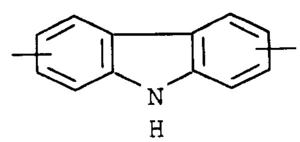

wobei

$L^1$ eine chemische Bindung, -N = N-, -CH = CH-, -O-, $-SO_2-$, -S-, -NH-CO-CO-NH- oder -CO-NH-NH-CO- und

$L^2$ eine chemische Bindung, 1,4- oder 1,3-Phenylen oder 1,5-Naphthylen bedeutet und die Benzol- und Naphthalinringe durch Halogen, Nitro, Sulfo, $C_1$-$C_6$-Alkyl und/oder $C_1$-$C_6$-Alkoxy substituiert sein können;

und die Ringe D' unabhängig voneinander durch Halogen, Nitro, Carboxy, Carbamoyl, $C_1$-$C_6$-Alkyl und/oder $C_1$-$C_6$-Alkoxy substituiert sein können.

Isoindoline stellen eine interessante Pigmentklasse mit guten Anwendungseigenschaften, insbesondere auch Echtheiten und Beständigkeiten, für den gelben bis roten sowie braunen bis schwarzen Farbtonbereich dar.

Es sind unverbrückte Pigmente (Isoindolinpigmente) und verbrückte Pigmente (Bisisoindolinpigmente) bekannt, bei denen zwei Isoindolineinheiten über ein Brückenglied miteinander verbunden sind. Bei den Bisisoindolinpigmenten sind nur symmetrische, zwei gleiche Isoindolineinheiten enthaltende Pigmente beschrieben (DE-A-35 03 776 und DE-A-29 24 142).

Um Pigmente mit bestimmten farbmetrischen und anwendungstechnischen Eigenschaften zu erhalten, sind jedoch vor allem die unsymmetrischen Bisisoindolinpigmente von Interesse. Diese Pigmente sind noch nicht beschrieben, in der DE-A-35 03 776 wird lediglich darauf hingewiesen, daß unsymmetrische Bisisoindoline durch Kondensation von Gemischen der entsprechenden Ausgangsverbindungen oder durch Umsetzung des Iminoisoindolinhalbkondensats mit einer Nitroaminoverbindung $H_2N$-L-$NO_2$, Reduktion des Umsetzungsproduktes zum Amin und anschließende Kondensation mit einem anderen Iminoisoindolinhalbkondensat erhältlich seien. Im ersten Fall können jedoch nur Mischungen symmetrischer und unsymmetrischer Bisisoindoline erhalten werden. Auch im zweiten Fall ist eine gezielte Herstellung der Verbindungen I nicht möglich, da der Verfahrens schritt der Reduktion nicht immer problemlos durchgeführt werden kann, so daß unerwünschte Nebenprodukte gebildet werden, oder je nach der Art der Reste A und L auch überhaupt nicht möglich ist.

Der Erfindung lag daher die Aufgabe zugrunde, ein Verfahren bereitzustellen, das die gezielte Herstellung unsymmetrischer Bisisoindolinpigmente ermöglicht.

Demgemäß wurde ein Verfahren zur Herstellung von unsymmetrischen Bisisoindolinpigmenten der allgemeinen Formel I

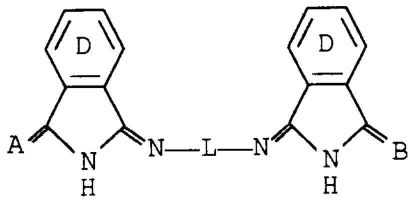

I

in der
A und B Reste verschiedener methylenaktiver Verbindungen bedeuten,
L für einen zweiwertigen Rest oder eine chemische Bindung steht und
die Ringe D gleich oder verschieden und gegebenenfalls substituiert sind,
gefunden, welches dadurch gekennzeichnet ist, daß man

a) ein Halbkondensat der Formel IIa

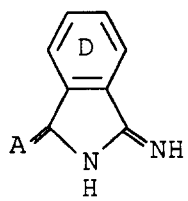

IIa

mit einer Verbindung der Formel III

$H_2N\text{-}L\text{-}NH_2$ III

in einem inerten organischen Lösungsmittel umsetzt und

b) die in Schritt a) erhaltene Verbindung der Formel IV

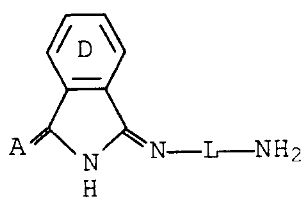

IV

direkt oder nach Isolierung mit einem Halbkondensat der Formel IIb

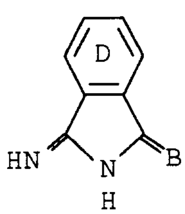

IIb

in Gegenwart einer Säure und gegebenenfalls eines inerten organischen Lösungsmittels umsetzt.

Außerdem wurden neue Verbindungen der Formel IV

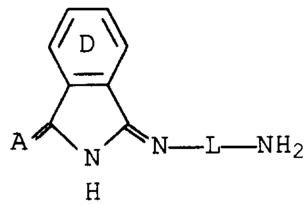

IV

als Zwischenprodukte bei der Herstellung der unsymmetrischen Bisisoindolinpigmente gefunden.

Nicht zuletzt wurden die unsymmetrischen Bisisoindolinpigmente der eingangs definierten allgemeinen Formel I' und ihre Verwendung zum Pigmentieren von hochpolymeren organischen Materialien wie Kunststoffen, Druckfarben und Lacken gefunden.

Besondere Bedeutung hat das erfindungsgemäße Verfahren für die Herstellung von unsymmetrischen Bisisoindolinpigmenten der Formel I', in der die Variablen die folgende Bedeutung haben:

Die Ringe D' können unabhängig voneinander bis zu 4 der folgenden Substituenten tragen: Halogen, Nitro, Carboxy, Carbamoyl, $C_1$-$C_6$-Alkyl und/oder $C_1$-$C_6$-Alkoxy. Besonders bevorzugt sind die Ringe D' jedoch unsubstituiert.

Geeignete Reste A' und B' entsprechen neben Sauerstoff und Schwefel vor allem den Resten verschiedener, methylenaktiver Verbindungen mit den Formeln (ABI) bis (ABXI) :

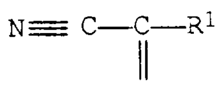

(ABI)

wobei $R^1$ folgende Bedeutung hat:

Cyano;

Carbamoyl, das durch 3,3,5,5-Tetramethyl-4-piperidyl oder

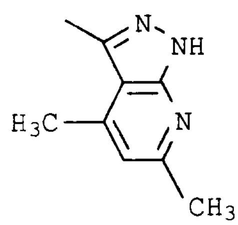

durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, Formylamino, $C_2$-$C_{10}$-Alkanoylamino, $C_1$-$C_{10}$-Alkoxycarbonyl, insbesondere Acetyl, Mono- oder Di($C_1$-$C_{10}$-alkyl)amino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können; Phenyl, das durch Halogen, Cyano, Nitro, Sulfo und/oder Trifluormethyl substituiert sein kann;

Carbazoyl oder Ureidocarbonyl, deren endständige Stickstoffatome ein- oder zweifach durch $C_1$-$C_6$-Alkyl oder Benzyl, das die obengenannten Substituenten tragen kann, substituiert sein können;

einen heterocyclischen Rest der Formeln

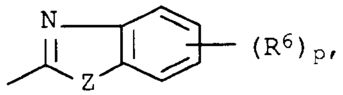

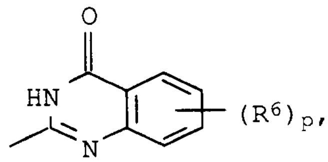

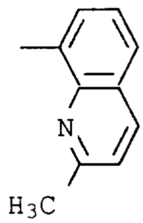

oder

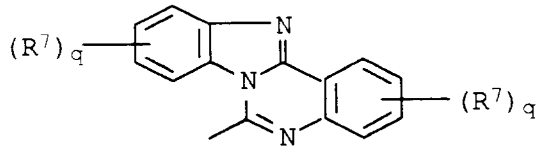

wobei

- Z -O-, -S- oder -NH-,
- $R^6$ Halogen, Nitro, Sulfo, $C_1$-$C_6$-Alkyl oder $C_1$-$C_6$-Alkoxy,
- $R^7$ Halogen,
- p 0 bis 2 und
- q 1 bis 4 bedeutet;

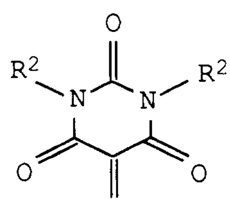

(ABII)

wobei die Reste $R^2$ unabhängig voneinander Wasserstoff, $C_1$-$C_6$-Alkyl, Phenyl oder Naphthyl, das jeweils durch Halogen, Nitro, Sulfo, $C_1$-$C_6$-Alkyl und/oder $C_1$-$C_6$-Alkoxy substituiert sein kann, bedeuten;

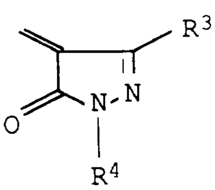

(ABIII)

wobei die Variablen folgende Bedeutung haben:

- $R^3$ $C_1$-$C_6$-Alkyl, insbesondere Methyl, Amino, Benzoylamino, Carboxyl, Carbamoyl oder $C_1$-$C_6$-Alkoxycarbonyl;
- $R^4$ Wasserstoff oder Phenyl, das bis zu zwei der folgenden Substituenten tragen kann: Halogen, insbesondere Chlor, Nitro, Sulfo, Carboxy, Carbamoyl, $C_1$-$C_6$-Alkyl, $C_1$-$C_6$-Alkoxy oder $C_1$-$C_6$-Alkoxycarbonyl;

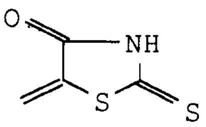 oder 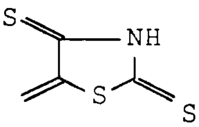 (ABIVa,b)

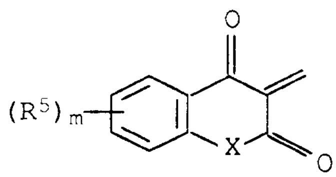 (ABV)

wobei die Variablen folgende Bedeutung haben:

- X -O- oder $-NR^8-$wobei $R^8$ Wasserstoff oder $C_1$-$C_6$-Alkyl, insbesondere Methyl, bedeutet;
- $R^5$ Halogen, insbesondere Chlor, oder Nitro;
- m 0 bis 4;

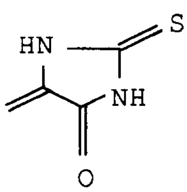 oder 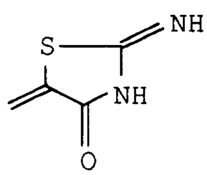, (ABVIa,b)

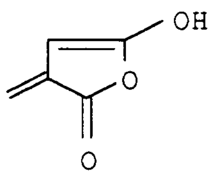, 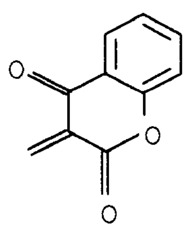, (ABVII), (ABVIII)

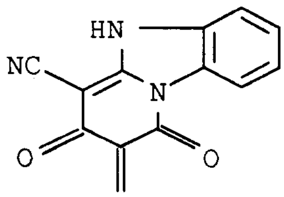, (ABIX)

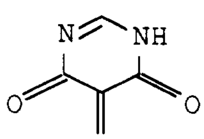, 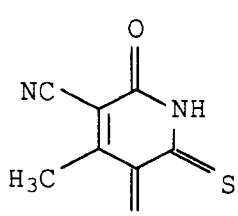 (ABX), (ABXI)

Als Brückenglieder L' sind neben der Bedeutung als chemische Bindung insbesondere folgende zweiwertige Reste der Formeln (LI) bis (LXII) zu nennen:

- $-(CH_2)_n-$ (LI)
  wobei n 1 bis 6 bedeutet;

- 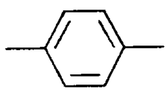 oder 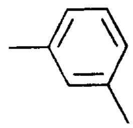 (LII)
- 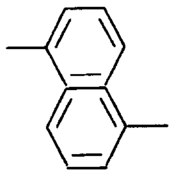 (LIII)
- 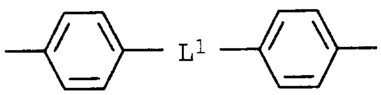 (LIV)

  wobei $L^1$ eine chemische Bindung, -N = N-, -CH = CH-, -O-, -S, $-SO_2-$, -NH-CO-CO-NH- oder -CO-NH-NH-CO- bedeutet;
- $-CO-NH-L^2-NH-CO-$ (LV)

  wobei $L^2$ eine chemische Bindung, 1,4- oder 1,3-Phenylen oder 1,5-Naphthylen bedeutet;
- $-NH-CO-L^2-CO-NH-$ (LVI)
- 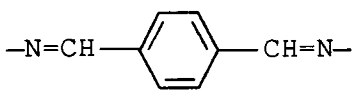 (LVII)
- 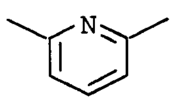 (LVIII)
- 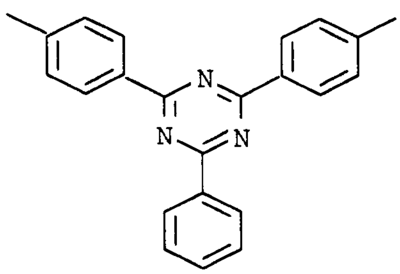 (LIX)

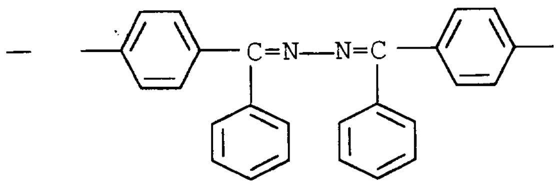

(LX)

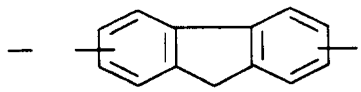

oder

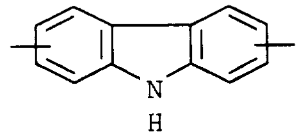

(LXI), (LXII)

wobei die Benzol- und Naphthalinringe gegebenenfalls durch Halogen, Nitro, Sulfo, $C_1$-$C_6$-Alkyl und/oder $C_1$-$C_6$-Alkoxy bis zu vierfach substituiert sind; vorzugsweise sind die Ringe nicht oder durch Chlor, Brom, Methyl, Ethyl, Methoxy und/oder Ethoxy substituiert.

Von den vorstehend aufgeführten Resten seien beispielhaft genannt:

- $C_1$-$C_{18}$-Alkyl, bevorzugt $C_1$-$C_6$-Alkyl, wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl und 2-Methylpentyl, insbesondere Methyl und Ethyl;
- $C_1$-$C_{10}$-Alkoxy, bevorzugt $C_1$-$C_6$-Alkoxy, wie Methoxy, Ethoxy, Propoxy, Isopropoxy, Butoxy, Isobutoxy, sec.-Butoxy, tert.-Butoxy, Pentyloxy und Hexyloxy, insbesondere Methoxy und Ethoxy;
- $C_1$-$C_{10}$-Alkylcarbonyl, bevorzugt $C_1$-$C_6$-Alkylcarbonyl, wie Acetyl, Propionyl, insbesondere Acetyl;
- $C_1$-$C_{10}$-Alkoxycarbonyl, bevorzugt $C_1$-$C_6$-Alkoxycarbonyl, wie insbesondere Methoxycarbonyl und Ethoxycarbonyl;
- Mono- und Di-($C_1$-$C_{10}$-alkyl)-, bevorzugt -($C_1$-$C_6$-alkyl)amino, wie Methylamino, Ethylamino, Propylamino, Isopropylamino, Butylamino, Pentylamino und Hexylamino, insbesondere Methylamino und Ethylamino; Cycloalkylamino wie Cyclopropyl-, Cyclobutyl-, Cyclopentyl- und Cyclohexylamino; Dimethylamino, Diethylamino, Dipropylamino, Diisopropylamino und Methylethylamino;
- $C_2$-$C_{10}$-Alkanoylamino, bevorzugt $C_2$-$C_7$-Alkanoylamino, wie insbesondere Acetylamino;
- Mono- und Di-($C_1$-$C_{10}$-alkyl)-, bevorzugt -($C_1$-$C_6$-alkyl)aminosulfonyl, wie insbesondere Methyl- und Ethylaminosulfonyl;
- Halogen, wie insbesondere Chlor und Brom.

Bevorzugte Bisisoindolinpigmente I' enthalten als Reste A' und B' verschiedene Reste der Formel (ABI).

Unter diesen Resten sind als besonders bevorzugt die Reste hervorzuheben, bei denen $R^1$ $C_1$-$C_6$-Alkylaminocarbonyl, vor allem Methylaminocarbonyl,

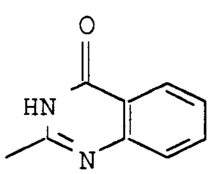

oder

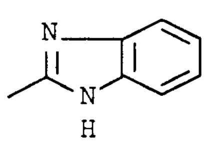

bedeutet.

Die Brückenglieder L' bedeuten in bevorzugten Bisisoindolinpigmenten I' Reste der Formeln (LII) und (LIII).

Unter diesen Resten sind die nichtsubstituierten Reste als besonders bevorzugt hervorzuheben, wobei die Gruppierung (LII) 1,4-Phenylen bevorzugt ist.

Das erfindungsgemäße Herstellungsverfahren ist ein zweistufiges Verfahren, bei dem im ersten Verfahrensschritt a) ein Halbkondensat IIa mit einer das Brückenglied enthaltenden Verbindung III (z.B. einem aliphatischen, cyclischen oder aromatischen Diamin) zu dem neuen Zwischenprodukt der Formel IV

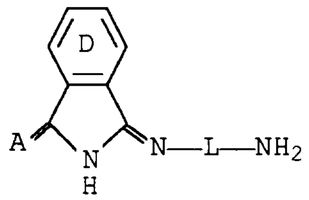

IV

umgesetzt wird, das dann im zweiten Verfahrensschritt b) direkt oder nach Isolierung mit einem weiteren Halbkondensat IIb zum gewünschten unsymmetrischen Bisisoindolin I kondensiert wird.

Überraschend ist hierbei, daß das Zwischenprodukt IV nicht direkt unter Bildung des symmetrischen Kondensationsprodukts weiterreagiert und sogar isoliert werden kann.

Für die gezielte Reaktionsführung, d.h. die gezielte Synthese des Zwischenprodukts IV und damit auch des Bisisoindolins I, ist die Auswahl des Lösungsmittels in den beiden Verfahrensschritten wesentlich.

Die Herstellung des Zwischenprodukts IV im Verfahrens schritt a) wird in Gegenwart eines gegenüber den Reaktanden inerten organischen Lösungsmittels vorgenommen.

Geeignet sind hier polare protische Lösungsmittel wie ein- oder mehrwertige aromatische Alkohole und aliphatische Alkohole, Etheralkohole, offenkettige und cyclische Ether, dipolar-aprotische Lösungsmittel und aromatische Lösungsmittel wie Nitrobenzol, Toluol und Chlorbenzol.

Im einzelnen seien z.B. genannt: Phenol, $C_1$-$C_6$-Alkohole, bevorzugt $C_1$-$C_4$-Alkanole wie Ethanol, Propanol, Isopropanol, Butanol und vor allem Methanol; Ethylenglykolmono- und -di-($C_1$-$C_6$)alkylether wie Ethylenglykolmono- und -dimethylether, Oligo- und Polyglykole und -glykolether wie Diethylenglykolmonomethylether, Dioxan und Tetrahydrofuran; Dimethylsulfoxid und amidische Lösungsmittel wie Dimethylformamid, Dimethylacetamid und N-Methylpyrrolidon. Geeignet sind auch Mischungen dieser Lösungsmittel, z.B. Dimethylacetamid/Alkanol, Phenol/Alkanol.

Die Menge Lösungsmittel ist an sich nicht kritisch und beträgt in der Regel 5 bis 100 g, vorzugsweise 10 bis 50 g je g IIa.

Die Umsetzung des Zwischenprodukts IV mit dem Halbkondensat IIb im Verfahrens schritt b) wird dann, wie für derartige Kondensationen üblich, in Gegenwart einer Säure und gegebenenfalls eines gegenüber den Reaktanden inerten organischen Lösungsmittels durchgeführt.

Als Säuren kommen dabei sowohl anorganische als auch organische Säuren in Betracht. Beispielsweise seien Schwefelsäure, Salzsäure und Phosphorsäure sowie aliphatische und aromatische Mono- und Dicarbon- und -sulfonsäuren, insbesondere Ameisensäure, Essigsäure, Propionsäure, Benzoesäure, Benzolsulfonsäure und Methansulfonsäure genannt. Geeignet sind auch Mischungen dieser Säuren.

Geeignete organische Lösungsmittel sind die für Schritt a) genannten Lösungsmittel, wobei das eingesetzte Lösungsmittel so ausgewählt werden sollte, daß es nicht mit der Säure reagiert.

Insbesondere bei Verwendung anorganischer Säuren empfiehlt sich die gleichzeitige Anwesenheit eines organischen Lösungsmittels als Reaktionsmedium. Organische Säuren wie Ameisensäure, Essigsäure, Propionsäure und Benzoesäure können gleichzeitig auch als Reaktionsmedium dienen, bevorzugt sind jedoch in der Regel ebenfalls Mischungen mit organischen Lösungsmitteln. Als Beispiele für besonders geeignete Systeme sind Phenol/Schwefelsäure-Gemische (Gewichtsverhältnisse von im allgemeinen 1:1 bis 99:1, bevorzugt 1:1 bis 9:1), Phenol/ Eisessig-Gemische (Gewichtsverhältnisse von in der Regel 1:1 bis 99:1, bevorzugt 1:1 bis 9:1) zu nennen.

Da die Säure als Katalysator für die Kondensationsreaktion wirkt, reichen auch Einsatzmengen aus, die unter einem stöchiometrischen Bedarf liegen.

Die Menge an organischem Lösungsmittel ist wiederum nicht kritisch und wird durch die Rührbarkeit des Reaktionsgemisches bestimmt.

In der Regel wird der Verfahrensschritt a) bei 0 bis 100 °C, insbesondere 30 bis 80 °C vorgenommen. Die zu wählende Temperatur hängt dabei auch von der Rückflußtemperatur des verwendeten Lösungsmittels ab.

Für den Verfahrensschritt b) sind Temperaturen von im allgemeinen 50 bis 200 °C, vorzugsweise 70 bis 140 °C geeignet. Selbstverständlich können auch niedrigere Temperaturen gewählt werden, was jedoch eine Verlangsamung der Reaktion zur Folge hat.

Üblicherweise arbeitet man sowohl in Schritt a) als auch in Schritt b) bei Normaldruck. Es wäre jedoch auch möglich, beide oder eine der beiden Kondensationsreaktionen unter Druck durchzuführen.

Gängige Reaktionszeiten sind in beiden Verfahrensschritten 10 min bis 5 h, wobei die Reaktion meist schon nach der Aufheizphase beendet ist.

Die Reaktanden (IIa und III bzw. IV und IIb) werden zweckmäßigerweise in etwa äquimolarem Verhältnis eingesetzt.

Die Halbkondensate IIa und IIb selbst sind an sich bekannt oder können in bekannter Weige durch Umsetzung der entsprechenden Iminoaminoisoindolenine, Trichlcrisoindolenine und entsprechend aktivierter Derivate oder direkt aus den entsprechenden o-Phthalodinitrilen mit methylenaktiven (C-H-aciden) Verbindungen hergestellt werden.

Verfahrenstechnisch geht man im allgemeinen so vor, daß man ein gewünschtenfalls erwärmtes Gemisch aus Lösungsmittel und Halbkondensat IIa vorlegt und die das Brückenglied L enthaltende Verbindung zugibt. Die Zugabe kann dabei kontinuierlich erfolgen.

Nach abgeschlossener Kondensationsreaktion kann man das Zwischenprodukt IV isolieren oder direkt in Form des Reaktionsgemisches unter Zusatz der Säure und weiterem Erhitzen auf die gewünschte Temperatur mit dem Halbkondensat IIb umsetzen. Die Vorgehensweise richtet sich dabei vor allem danach, ob das Lösungsmittel von Schritt a) auch für den Schritt b) geeignet ist.

Die Aufarbeitung des Reaktionsgemisches auf die Bisisoindolinpigmente I kann in üblicher Weise vorgenommen werden, indem man die Pigmente nach dem Abkühlen der Mischung abfiltriert, gegebenenfalls mit einem inerten Lösungsmittel wie Dimethylformamid, Dimethylacetamid oder N-Methylpyrrolidon oder Eisessig, Alkoholen und/oder Wasser wäscht und trocknet.

Je nach den Anforderungen für die Anwendung kann man die Pigmente direkt in der anfallenden Form verwenden oder wird man erst eine übliche Mahlung und/oder eine übliche Lösungsmittelbehandlung gegebenenfalls in Gegenwart die Kristallisation beeinflussender Additive vornehmen. Selbstverständlich kann die Kristallisationssteuerung auch bereits bei der Synthese durch an sich bekannte Maßnahmen wie den Zusatz kristallisationshemmender Additive, die Einwirkung von Scherkräften während der Umsetzung sowie den Zusatz von Mahlkörpern und/oder gezielte Temperaturführung erfolgen.

Mit Hilfe des erfindungsgemäßen Verfahrens können die unsymmetrischen Bisisoindolinpigmente gezielt, in guter Ausbeute und Reinheit hergestellt werden.

Die so erhältlichen unsymmetrischen Bisisoindolinpigmente I können vorteilhaft zum Färben von hochmolekularen organischen Materialien verwendet werden. Insbesondere seien die Herstellung von Druckfarben und Lacken sowie die Pigmentierung von Kunststoffen genannt.

Beispiele für zu färbende Materialien sind: natürliche Harze; Kunstharze (Polymerisations- und Kondensationsharze) wie Alkydharze, Acrylharze, Epoxidharze, Aminoformaldehydharze wie Melamin- und Harnstoffharze; Celluloseether und -ester wie Ethylcellulose, Nitrocellulose, Celluloseacetat und -butyrat Polyurethane; Polyvinylchloride; Chlorkautschuk; Polyolefine; Polyamide; Polyester; Epoxyester; Polycarbonate; Phenoplaste; Gummi; Casein; Silikon und Silikonharze sowie auch Mischungen der genannten Materialien.

Die hochmolekularen organischen Materialien können beim Färben als plastische Massen, Schmelzen, Lösungen, Emulsionen oder Dispersionen vorliegen. Bei der Lack- und Druckfarbenherstellung verwendet man bevorzugt Lösungen oder Dispersionen. Als Beispiele für bevorzugte Lacksysteme seien Alkyd/Melaminharzlacke, Acryl/Melaminharzlacke, Celluloseacetat/Cellulosebutyratlacke und Zweikomponentenlacke auf Basis mit Polyisocyanat vernetzbarer Acrylharze genannt.

Beispiele

Herstellung von unsymmetrischen Bisisoindolinpigmenten der Formel

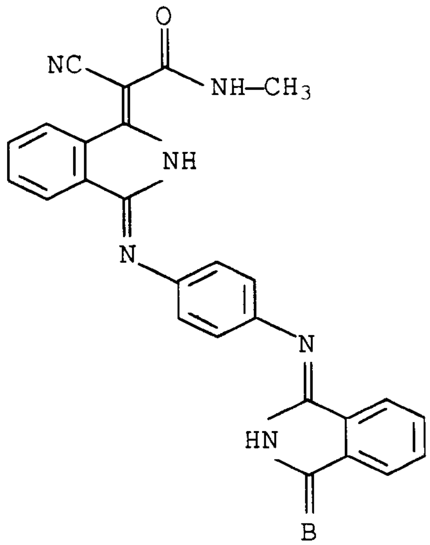

Beispiel 1 (B: 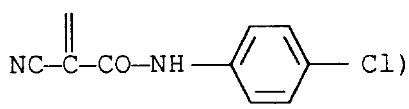 )

a) Zu einer Suspension von 22,6 g des Halbkondensats

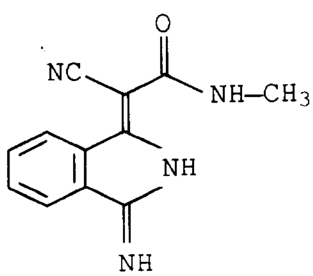

in 300 ml Methanol wurden bei Raumtemperatur 10,8 g p-Phenylendiamin, gelöst in 100 ml Methanol, zugetropft. Die Reaktionsmischung wurden dann 1 h unter Rückfluß gerührt.

Anschließend wurde das Lösungsmittel zur Hälfte abdestilliert und der Niederschlag durch Filtrieren isoliert, mit Methanol und Wasser gewaschen und getrocknet.

Es wurden 28,7 g der Verbindung

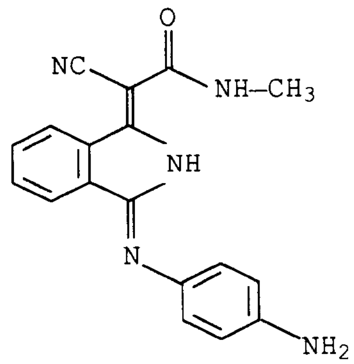

als rotes Pulver mit dem Schmelzpunkt 285 °C erhalten, was einer Ausbeute von 90,5 % entspricht.
Physikalische Daten:
Elementaranalyse:
C: gef. 68,0 (ber. 68,1); H: gef. 4,9 (ber. 4,8);
O: gef. 5,5 (ber. 5,0); N: gef. 21,9 (ber. 22,1);
MS: m/e = 317,0 ($C_{18}H_{15}ON_5^+$);
$^1$H-NMR(DMSO-$d_6$; TMS):
2,72 - 2,73 (d, 1H, NH-C$\underline{H}_3$);
2,80 - 2,82 (d, 2H, NH-C$\underline{H}_3$);
3,73 (s, Wasser); 5,29 (s; breit); 5,41 (s; breit);
6,67 - 6,72 (m, 2H, arom.);
6,94 - 6,97 (d, 0,6H, arom.); 7,49 - 7,52 (d, 1,4H, arom.);
7,68 - 7,71 (m, 2H, arom.); 8,0 - 8,1 (m, 0,6H, arom.)
8,25 - 8,37 (m, 1,4H, arom.); 9,91 - 9,94 (q, 1H, N$\underline{H}$-$CH_3$);
11,27 (breit); 12,01 (bewegl. Protonen) ppm;
DC (Merck-Kieselgel 60 $F_{254}$, Alumiumfolie-Fertigplatten):
$R_f$ (Aceton): 0,8;
$R_f$ (n-Butanol/Eisessig/Wasser Vol. 3:1:1): 0,82;
$R_f$ (Toluol/Eisessig/Essigsäureethylester Vol. 7:1:1): 0,45.
b) Zu einer Suspension von 15,9 g des in a) hergestellten Amins in 400 ml Eisessig wurden bei Raumtemperatur 16,1 g des Halbkondensats

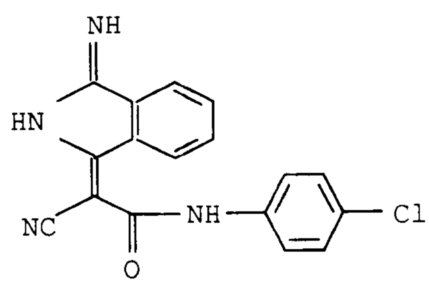

gegeben. Die Reaktionsmischung wurde dann 3 h unter Rückfluß gerührt und anschließend bei 70 °C filtriert.

Der isolierte Niederschlag wurde zunächst mit Eisessig und dann mit Wasser gewaschen.

Es wurden 30,9 g des Zielprodukts als rotes Pulver mit dem Schmelzpunkt 347 - 351 °C erhalten, was einer Ausbeute von 99,2 % entspricht.
Elementaranalyse:
C: gef. 67,0 (ber. 67,5); H: gef. 4,0 (ber. 3,7);
O: gef. 6,0 (ber. 5,14); N: gef. 17,8 (ber. 18,0);
Cl: gef. 5,4 (ber. 5,7).

Zur Beurteilung der Koloristik wurden 1 g Pigment und 9,5 g einer Einbrennlackmischung aus 70 Gew.-% Kokosalkydharz (60 gew.-%ig in Xylol) und 30 Gew.-% Melaminharz (55 gew.-%ig in Butanol/Xylol) in einem Attritor angerieben, auf Blech aufgetragen, abgelüftet und 30 min bei 120 °C eingebrannt.

Es wurde eine rote Lackierung erhalten.

Beispiel 2 bis 73

Analog Beispiel 1 wurden die in der folgenden Tabelle aufgeführten Bisisoindolinpigmente hergestellt und in das obengenannte Lacksystem eingearbeitet.

Tabelle

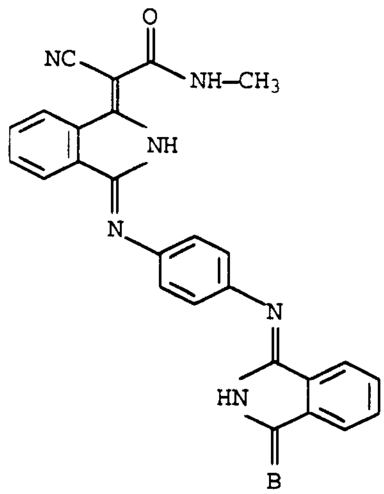

| Bsp. | B | Lackfärbung |
|---|---|---|
| 2 | 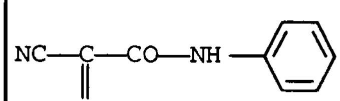 | orange |
| 3 | 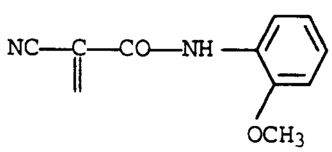 | orange |
| 4 | 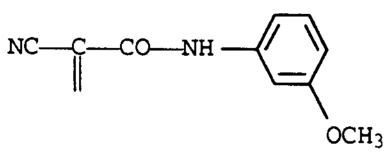 | orangebraun |
| 5 | 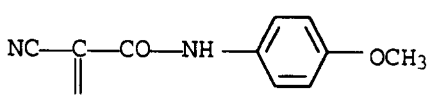 | orange |
| 6 | 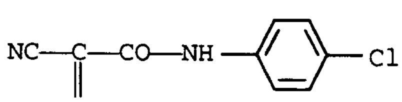 | rot |

| Bsp. | B | Lackfärbung |
|---|---|---|
| 7 | 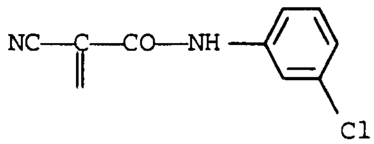 | rot |
| 8 | 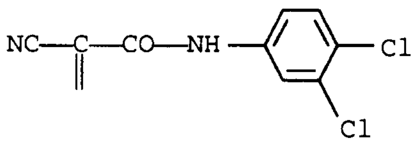 | rot |
| 9 | 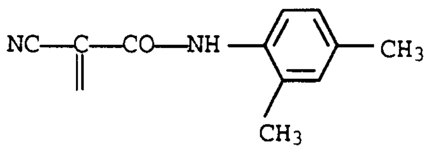 | orange |
| 10 | 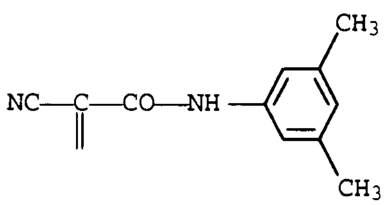 | orange |
| 11 | 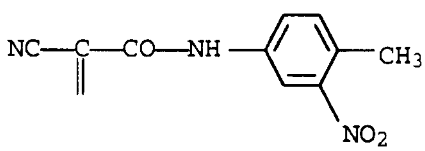 | rot |
| 12 | 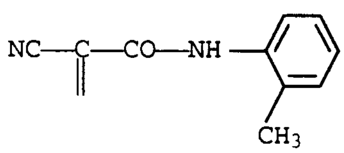 | orange |
| 13 | 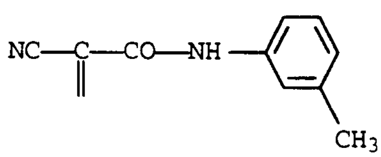 | orange |
| 14 | 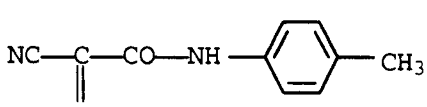 | orangerot |

| Bsp. | B | Lackfärbung |
|---|---|---|
| 15 | 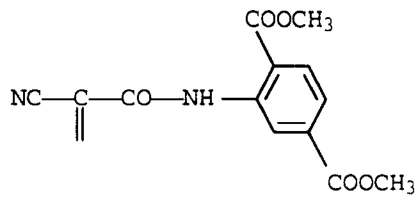 | orangerot |
| 16 | 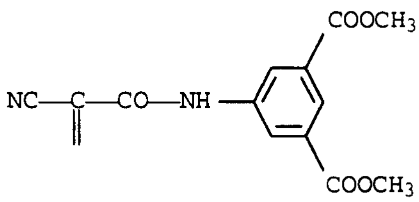 | rotbraun |
| 17 | 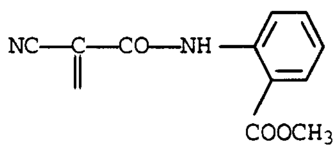 | orangerot |
| 18 | 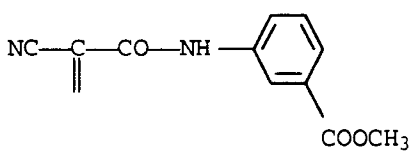 | orange |
| 19 | 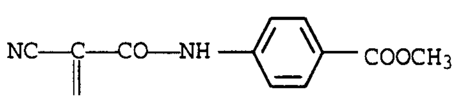 | rot |
| 20 | 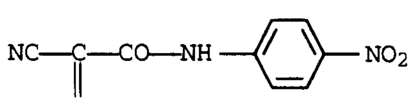 | braun |
| 21 | 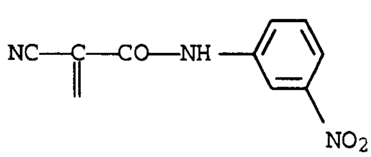 | rotbraun |
| 22 | 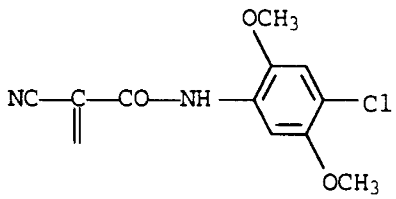 | hellbraun |

| Bsp. | B | Lackfärbung |
|---|---|---|
| 23 | 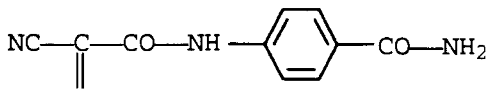 | rötlichbraun |
| 24 | 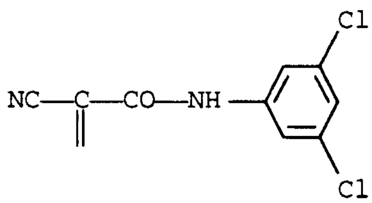 | rotbraun |
| 25 | 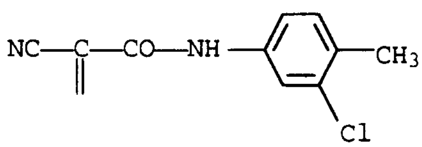 | rot |
| 26 | 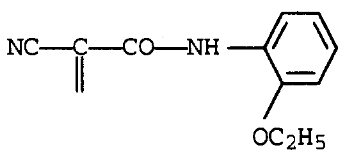 | orange |
| 27 | 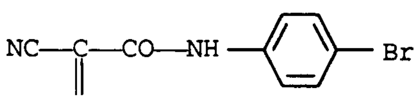 | rot |
| 28 | 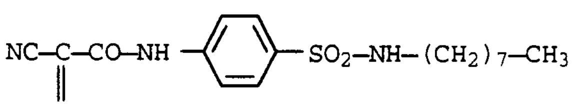 | rotbraun |
| 29 | 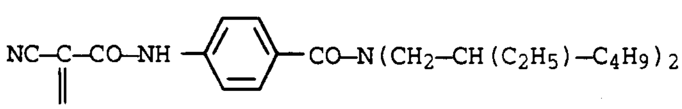 | orange |
| 30 | 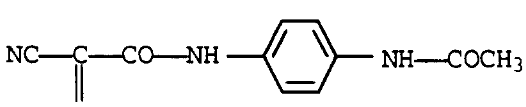 | rotbraun |

| Bsp. | B | Lackfärbung |
|---|---|---|
| 31 | 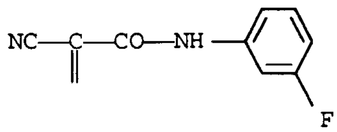 | rotbraun |
| 32 | 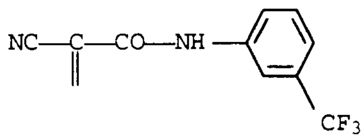 | orange |
| 33 | 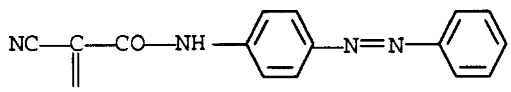 | rot |
| 34 | 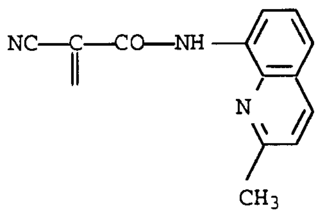 | orange |
| 35 | 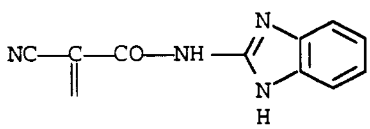 | rotbraun |
| 36 | 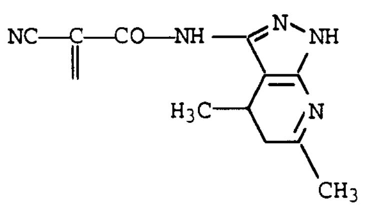 | schwarzbraun |
| 37 | 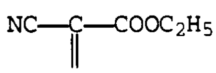 | orange |
| 38 | 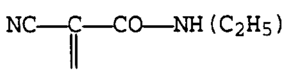 | orange |
| 39 | 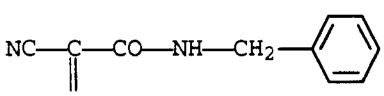 | orange |

| Bsp. | B | Lackfärbung |
|---|---|---|
| 40 | $NC—C—CO—NH—CO—NH_2$ | orangebraun |
| 41 | $NC—C—CO—NH_2$ | orange |
| 42 | $NC—C—CO—N(CH_3)_2$ | orange |
| 43 | $NC—C—CO—NH(C_3H_7)$ | orange |
| 44 | $NC—C—CO—NH(C_4H_9)$ | orange |
| 45 | $NC—C—CO—NH—CH(CH_3)_2$ | braun |
| 46 | $NC—C—CO—NH—CH(CH_3)(C_2H_5)$ | orange |
| 47 | $NC—C—CO—NH—CH_2—CH(CH_3)_2$ | orange |
| 48 | $NC—C—CO—NH—NH_2$ | schwarzbraun |
| 49 | $NC—C—CO—NH—(CH_2)_3—N(CH_3)_2$ | orange |
| 50 | $NC—C—CO—NH—COOC_2H_5$ | rotbraun |
| 51 | $NC—C—CO—NH—CH_2—CH(C_2H_5)—(CH_2)_3—CH_3$ | orange |
| 52 | $NC—C—CO—NH—(CH_2)_{17}—CH_3$ | orange |
| 53 | 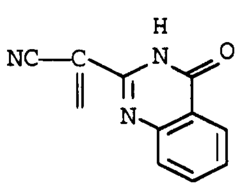 | braun |

| Bsp. | B | Lackfärbung |
|---|---|---|
| 54 | 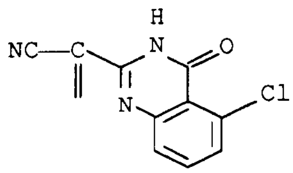 | rotbraun |
| 55 | 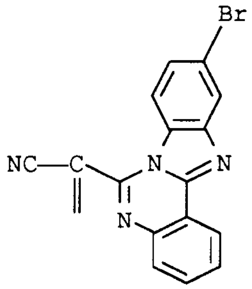 | hellbraun |
| 56 | 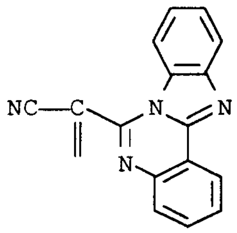 | hellbraun |
| 57 | 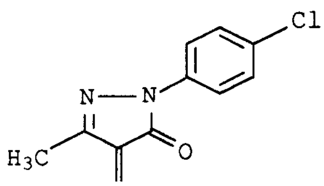 | schwarzbraun |
| 58 | 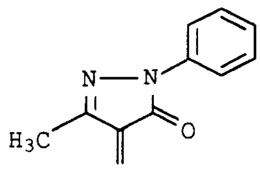 | schwarzbraun |
| 59 | 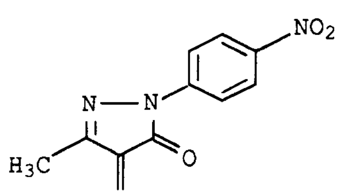 | schwarzbraun |

| Bsp. | B | Lackfärbung |
|---|---|---|
| 60 | 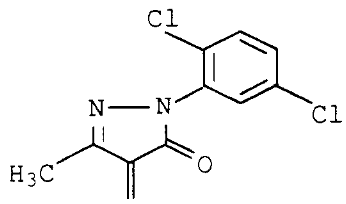 | schwarzbraun |
| 61 | 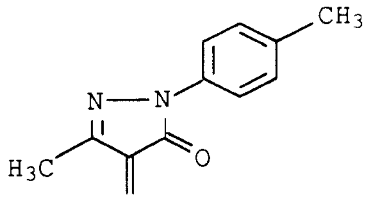 | schwarzbraun |
| 62 | 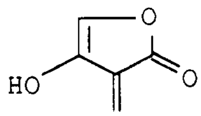 | dunkelbraun |
| 63 | 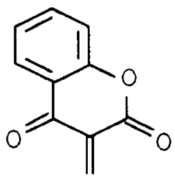 | schwarz |
| 64 | 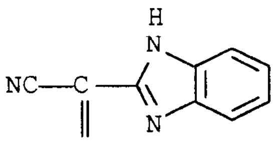 | dunkelrot (bordeaux) |
| 65 | 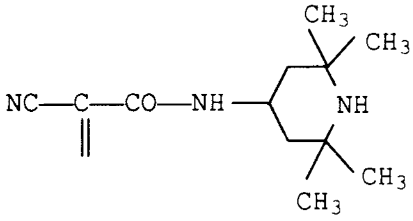 | orange |

| Bsp. | B | Lackfärbung |
|---|---|---|
| 66 | 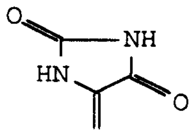 | orangebraun |
| 67 | 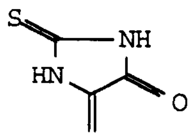 | braun |
| 68 | 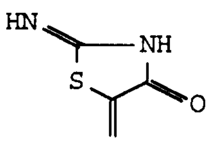 | braun |
| 69 | 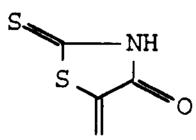 | braun |
| 70 | 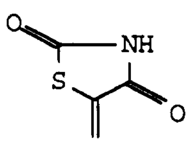 | braun |
| 71 | 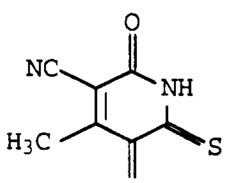 | braun |

| Bsp. | B | Lackfärbung |
|---|---|---|
| 72 | 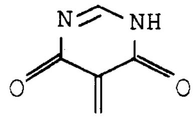 | dunkelbraun |
| 73 | 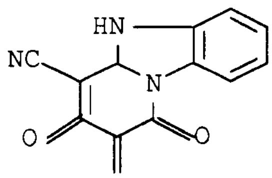 | schwarz |

**Patentansprüche**

1. Verfahren zur Herstellung von unsymmetrischen Bisisoindolinpigmenten der allgemeinen Formel I

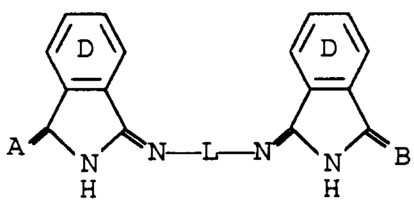

I

in der
A und B Reste verschiedener methylenaktiver Verbindungen, Sauerstoff oder Schwefel bedeuten,
L für einen zweiwertigen Rest oder eine chemische Bindung steht und
die Ringe D gleich oder verschieden und gegebenenfalls substituiert sind,
dadurch gekennzeichnet, daß man

a) ein Halbkondensat der Formel IIa

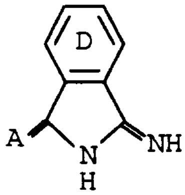

IIa

mit einer Verbindung der Formel III

$H_2N\text{-}L\text{-}NH_2$ III

in einem inerten organischen Lösungsmittel umsetzt und

b) die in Schritt a) erhaltene Verbindung der Formel IV

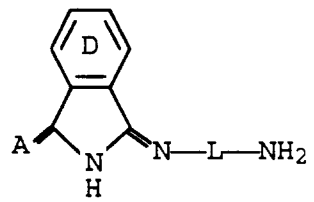

IV

direkt oder nach Isolierung mit einem Halbkondensat der Formel IIb

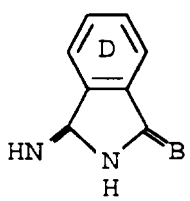

IIb

in Gegenwart einer Säure und gegebenenfalls eines inerten organischen Lösungsmittels umsetzt.

**2.** Verfahren nach Anspruch 1, dadurch gekennzeichnet, daß man es zur Herstellung von Bisisoindolinpigmenten der Formel I'

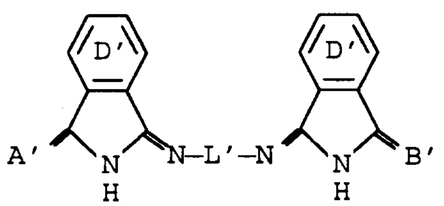

I'

anwendet, in der die Variablen folgende Bedeutung haben:
A',B' verschiedene Reste der Formeln

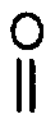, 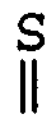, 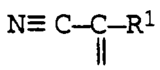, 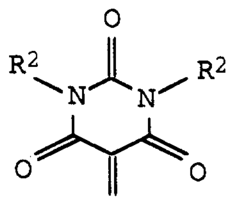, 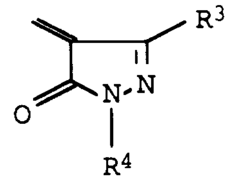,

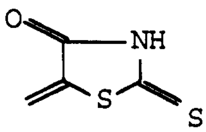, 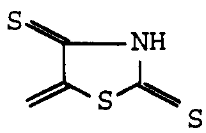, 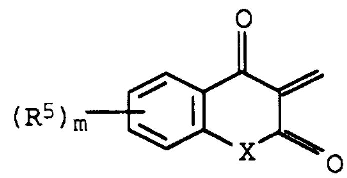,

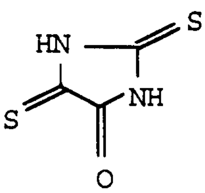, 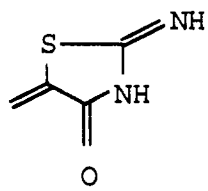, 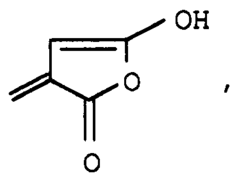,

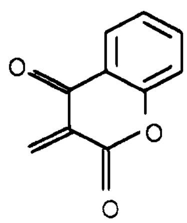, 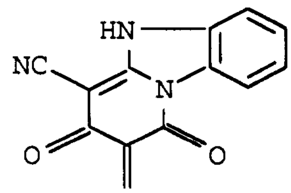,

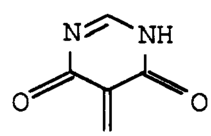 oder 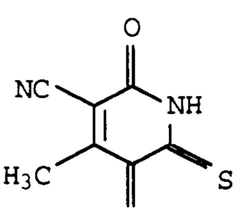

wobei die Variablen folgende Bedeutung haben:

$R^1$ Cyano;
Carbamoyl, das durch

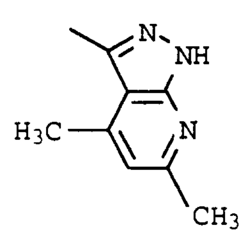

oder 3,3,5,5-Tetramethyl-4-piperidyl, durch $C_1$-$C_{18}$-Alkyl, $C_1$-$C_{10}$-Alkoxycarbonyl, Benzyl,

Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;
$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können;
Phenyl, das durch Halogen, Cyano, Nitro, Sulfo und/oder Trifluormethyl substituiert sein kann;
Carbazoyl oder Ureidocarbonyl, deren endständige Stickstoffatome ein- oder zweifach durch $C_1$-$C_6$-Alkyl oder Benzyl, das die oben genannten Substituenten tragen kann, substituiert sein können;
einen heterocyclischen Rest der Formeln

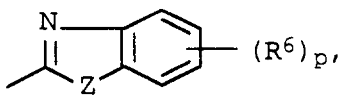

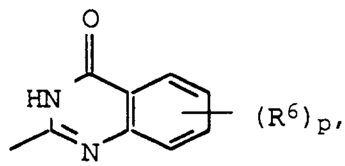

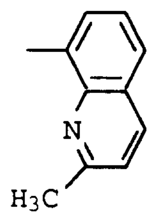

oder

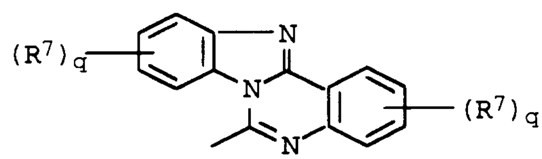

wobei

| | |
|---|---|
| Z | -O-, -S- oder -NH-, |
| $R^6$ | Halogen, Nitro, Sulfo, $C_1$-$C_6$-Alkyl oder $C_1$-$C_6$-Alkoxy, |
| $R^7$ | Halogen, |
| p | 0 bis 2 und |
| q | 1 bis 4 |

bedeutet;

| | |
|---|---|
| $R^2$ | unabhängig voneinander Wasserstoff, $C_1$-$C_6$-Alkyl, Phenyl oder Naphthyl, das jeweils durch Halogen, Nitro, Sulfo, $C_1$-$C_6$-Alkyl und/oder $C_1$-$C_6$-Alkoxy substituiert sein kann; |
| $R^3$ | $C_1$-$C_6$-Alkyl, Amino, Benzoylamino, Carboxyl, Carbamoyl oder $C_1$-$C_6$-Alkoxycarbonyl; |
| $R^4$ | Wasserstoff oder Phenyl, das bis zu zwei der folgenden Substituenten tragen kann: Halogen, Nitro, Sulfo, Carboxy, Carbamoyl, $C_1$-$C_6$-Alkyl, $C_1$-$C_6$-Alkoxy oder $C_1$-$C_6$-Alkoxycarbonyl; |
| $R^5$ | Halogen oder Nitro; |
| X | -O- oder -$NR^8$- wobei $R^8$ Wasserstoff oder $C_1$-$C_6$-Alkyl bedeutet; |
| m | 0 bis 4; |
| L' | eine chemische Bindung; $C_1$-$C_6$-Alkylen, 1,4- oder 1,3-Phenylen oder 1,5-Naphthylen, wobei Phenylen und Naphthylen durch Halogen, Nitro, Sulfo, $C_1$-$C_6$-Alkyl und/oder $C_1$-$C_6$-Alkoxy substituiert sein können; einen Rest der Formeln |

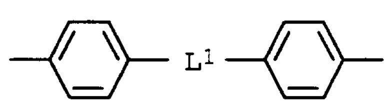

—CO—NH—$L^2$—NH—CO—, —NH—CO—$L^2$—CO—NH—

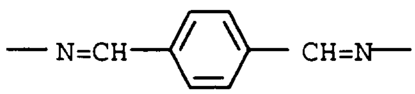 , 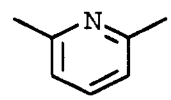

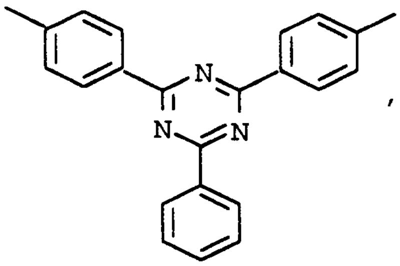 , 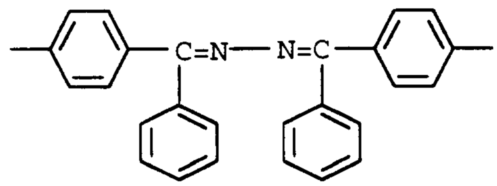

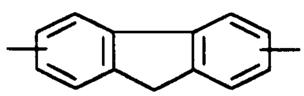 , 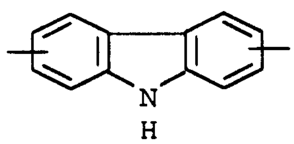

wobei

$L^1$ eine chemische Bindung, -N = N-, -CH = CH-, -O-, $-SO_2-$, -S-, -NH-CO-CO-NH- oder -CO-NH-NH-CO- und

$L^2$ eine chemische Bindung, 1,4- oder 1,3-Phenylen oder 1,5-Naphthylen bedeutet und

die Benzol- und Naphthalinringe durch Halogen, Nitro, Sulfo, $C_1$-$C_6$-Alkyl und/oder $C_1$-$C_6$-Alkoxy substituiert sein können;

und die Ringe D' unabhängig voneinander durch Halogen, Nitro, Carboxy, Carbamoyl, $C_1$-$C_6$-Alkyl und/oder $C_1$-$C_6$-Alkoxy substituiert sein können.

**3.** Verfahren nach Anspruch 1 oder 2, dadurch gekennzeichnet, daß man in Schritt a) als Lösungsmittel polare protische, dispolar-aprotische oder aromatische Lösungsmittel oder deren Mischungen verwendet.

**4.** Verfahren nach den Ansprüchen 1 bis 3, dadurch gekennzeichnet, daß man in Schritt b) als Säuren anorganische oder organische Säuren und als organische Lösungsmittel polare protische, dipolar aprotische oder aromatische Lösungsmittel oder deren Mischungen verwendet.

**5.** Verbindungen der allgemeinen Formel IV

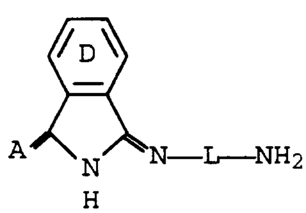

IV

in der

A den Rest einer methylenaktiven Verbindung, Sauerstoff oder Schwefel bedeutet,

L für einen zweiwertigen Rest oder eine chemische Bindung steht und

der Benzolring D gegebenenfalls substituiert ist.

**6.** Verbindungen nach Anspruch 5 der Formel IV'

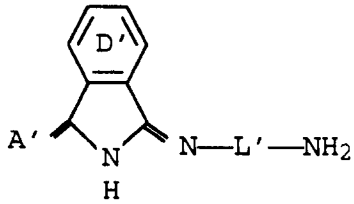

IV'

in der die Variablen folgende Bedeutung haben:
A' einen Rest der Formeln

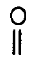 , 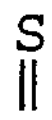 , 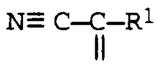 , 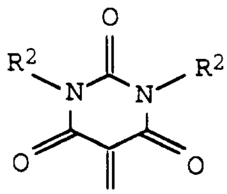 , 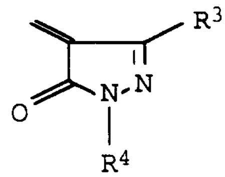 ,

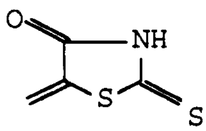 , 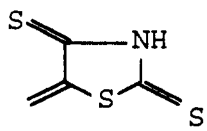 , 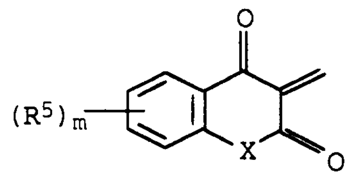 ,

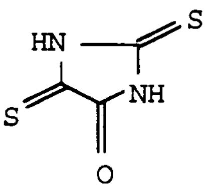 , 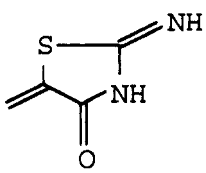 , 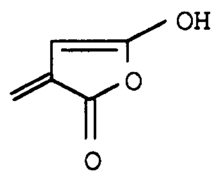 ,

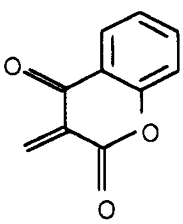 , 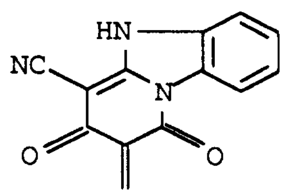 ,

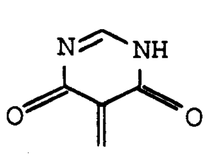 oder 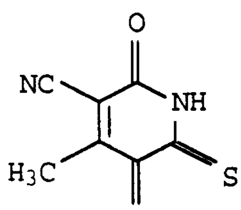

wobei die Variablen folgende Bedeutung haben:

$R^1$ Cyano;
Carbamoyl, das durch

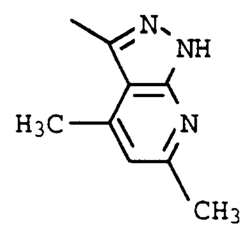

oder 3,3,5,5-Tetramethyl-4-piperidyl, durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können; Phenyl, das durch Halogen, Cyano, Nitro, Sulfo und/oder Trifluormethyl substituiert sein kann;

Carbazoyl oder Ureidocarbonyl, deren endständige Stickstoffatome ein- oder zweifach durch $C_1$-$C_6$-Alkyl oder Benzyl, das die oben genannten Substituenten tragen kann, substituiert sein können;

einen heterocyclischen Rest der Formeln

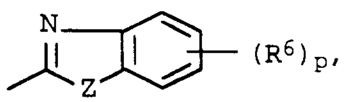

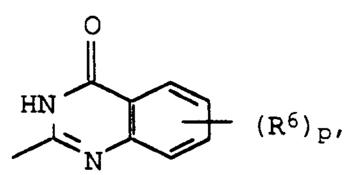

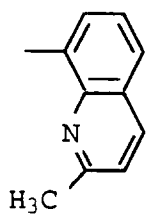

oder

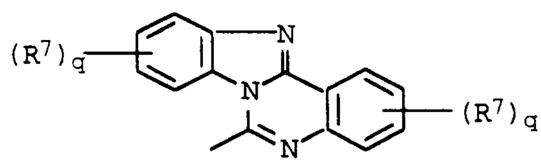

wobei

| | |
|---|---|
| Z | -O-, -S- oder -NH-, |
| $R^6$ | Halogen, Nitro, Sulfo, $C_1$-$C_6$-Alkyl oder $C_1$-$C_6$-Alkoxy, |
| $R^7$ | Halogen, |
| p | 0 bis 2 und |
| q | 1 bis 4 |
| | bedeutet; |
| $R^2$ | unabhängig voneinander Wasserstoff, $C_1$-$C_6$-Alkyl, Phenyl oder Naphthyl, das jeweils durch Halogen, Nitro, Sulfo, $C_1$-$C_6$-Alkyl und/oder $C_1$-$C_6$-Alkoxy substituiert sein kann; |
| $R^3$ | $C_1$-$C_6$-Alkyl, Amino, Benzoylamino, Carboxyl, Carbamoyl oder $C_1$-$C_6$-Alkoxycarbonyl; |
| $R^4$ | Wasserstoff oder Phenyl, das bis zu zwei der folgenden Substituenten tragen kann: Halogen, Nitro, Sulfo, Carboxy, Carbamoyl, $C_1$-$C_6$-Alkyl, $C_1$-$C_6$-Alkoxy oder $C_1$-$C_6$-Alkoxycarbonyl; |
| $R^5$ | Halogen oder Nitro; |
| X | -O- oder -$NR^8$-wobei $R^8$ Wasserstoff oder $C_1$-$C_6$-Alkyl bedeutet; |
| m | 0 bis 4; |
| L' | eine chemische Bindung; |

$C_1$-$C_6$-Alkylen, 1,4- oder 1,3-Phenylen oder 1,5-Naphthylen, wobei Phenylen und Naphthylen durch Halogen, Nitro, Sulfo, $C_1$-$C_6$-Alkyl und/oder $C_1$-$C_6$-Alkoxy substituiert sein können;
einen Rest der Formeln

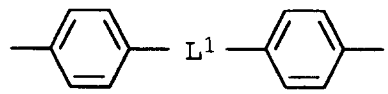

—CO—NH—$L^2$—NH—CO—, —NH—CO—$L^2$—CO—NH—

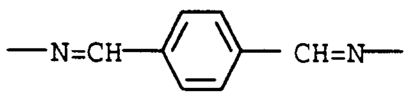 , 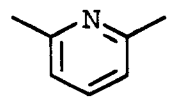

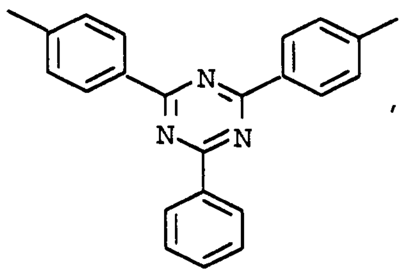 , 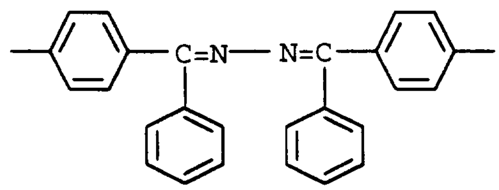

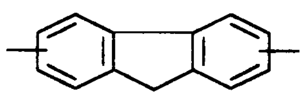 , 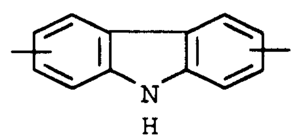

wobei

$L^1$ eine chemische Bindung, -N=N-, -CH=CH-, -O-, -$SO_2$-, -S-, -NH-CO-CO-NH- oder -CO-NH-NH-CO- und

$L^2$ eine chemische Bindung, 1,4- oder 1,3-Phenylen oder 1,5-Naphthylen bedeutet und die Benzol- und Naphthalinringe durch Halogen, Nitro, Sulfo, $C_1$-$C_6$-Alkyl und/oder $C_1$-$C_6$-Alkoxy substituiert sein können;

und der Ring D durch Halogen, Nitro, Carboxy, Carbamoyl, $C_1$-$C_6$-Alkyl und/oder $C_1$-$C_6$-Alkoxy substituiert sein kann.

**7.** Unsymmetrische Bisisoindolinpigmente der allgemeinen Formel I'

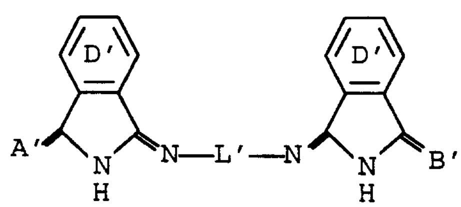

I'

in der die Variablen folgende Bedeutung haben:
A',B' verschiedene Reste der Formeln

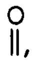, 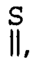, 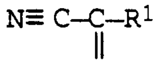, 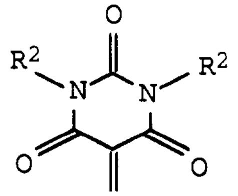, 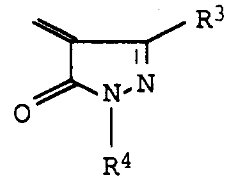,

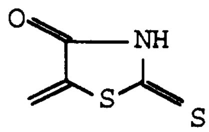, 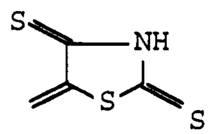, 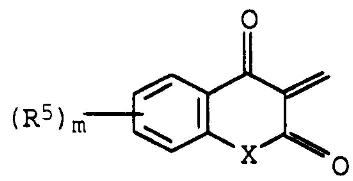,

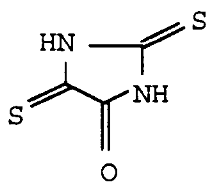, 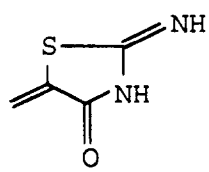, 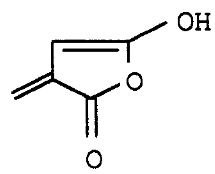,

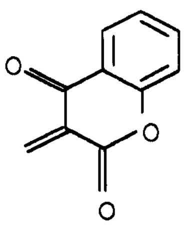, 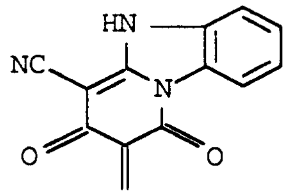,

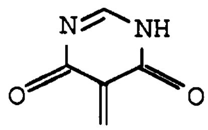 oder 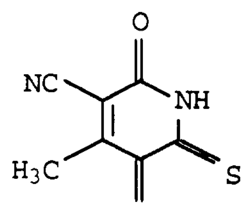

wobei die Variablen folgende Bedeutung haben:

$R^1$ Cyano;

Carbamoyl, das durch

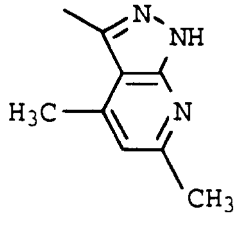

oder 3,3,5,5-Tetramethyl-4-piperidyl, durch $C_1$-$C_{18}$-Alkyl, $C_1$-$C_{10}$-Alkoxycarbonyl, Benzyl, Phenyl oder Naphthyl substituiert sein kann, wobei diese Substituenten ihrerseits durch Halogen, Cyano, Nitro, Sulfo, $C_1$-$C_{10}$-Alkyl, $C_1$-$C_{10}$-Alkoxy, $C_1$-$C_{10}$-Alkylcarbonyl, $C_1$-$C_{10}$-

Alkoxycarbonyl, Mono-($C_1$-$C_{10}$-alkyl)amino, Di-($C_1$-$C_{10}$-alkyl)amino, Formylamino, $C_2$-$C_{10}$-Alkanoylamino, Benzoylamino, Aminosulfonyl, Mono- oder Di-($C_1$-$C_{10}$-alkyl)aminosulfonyl, Phenylazo, 3,3,5,5-Tetramethyl-4-piperidyl, Phthalimidyl, Carbamoyl, das ein- oder zweifach durch $C_1$-$C_{10}$-Alkyl substituiert sein kann, und/oder Trifluormethyl substituiert sein können;

$C_1$-$C_{10}$-Alkylcarbonyl, Benzoyl, $C_1$-$C_{10}$-Alkoxycarbonyl, Phenoxycarbonyl oder Benzyloxycarbonyl, wobei Benzoyl, Phenoxy und Benzyloxy durch Halogen, Nitro, Sulfo, $C_1$-$C_{10}$-Alkyl, Formylamino, $C_2$-$C_{10}$-Alkanoylamino und/oder Phthalimidyl substituiert sein können;

Phenyl, das durch, Halogen, Cyano, Nitro, Sulfo und/oder Trifluormethyl substituiert sein kann;

Carbazoyl oder Ureidocarbonyl, deren endständige Stickstoffatome ein- oder zweifach durch $C_1$-$C_6$-Alkyl oder Benzyl, das die oben genannten Substituenten tragen kann, substituiert sein können;

einen heterocyclischen Rest der Formeln

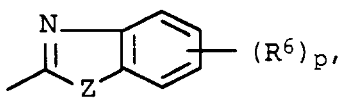

,

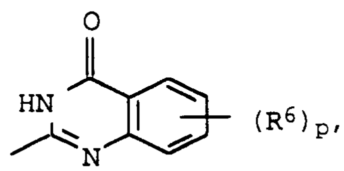

,

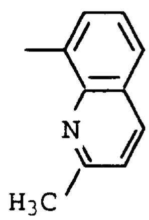

oder

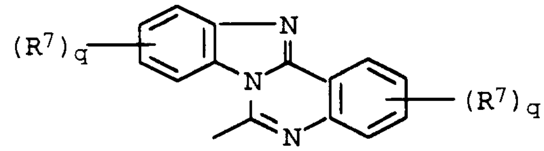

wobei

Z -O- -S- oder -NH-,

$R^6$ Halogen, Nitro, Sulfo, $C_1$-$C_6$-Alkyl oder $C_1$-$C_6$-Alkoxy,

$R^7$ Halogen,

p 0 bis 2 und

q 1 bis 4

bedeutet;

$R^2$ unabhängig voneinander Wasserstoff, $C_1$-$C_6$-Alkyl, Phenyl oder Naphthyl, das jeweils durch Halogen, Nitro, Sulfo, $C_1$-$C_6$-Alkyl und/oder $C_1$-$C_6$-Alkoxy substituiert sein kann;

$R^3$ $C_1$-$C_6$-Alkyl, Amino, Benzoylamino, Carboxyl, Carbamoyl oder $C_1$-$C_6$-Alkoxycarbonyl;

$R^4$ Wasserstoff oder Phenyl, das bis zu zwei der folgenden Substituenten tragen kann: Halogen, Nitro, Sulfo, Carboxy, Carbamoyl, $C_1$-$C_6$-Alkyl, $C_1$-$C_6$-Alkoxy oder $C_1$-$C_6$-Alkoxycarbonyl;

$R^5$ Halogen oder Nitro;

X -O- oder -$NR^8$-

wobei $R^8$ Wasserstoff oder $C_1$-$C_6$-Alkyl bedeutet;

m 0 bis 4;

L' eine chemische Bindung;

$C_1$-$C_6$-Alkylen, 1,4- oder 1,3-Phenylen oder

1,5-Naphthylen, wobei Phenylen und Naphthylen durch Halogen, Nitro, Sulfo, $C_1$-$C_6$-Alkyl und/oder $C_1$-$C_6$-Alkoxy substituiert sein können;

einen Rest der Formeln

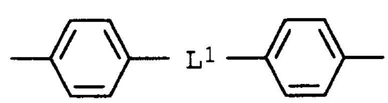

—CO—NH—$L^2$—NH—CO—, —NH—CO—$L^2$—CO—NH—

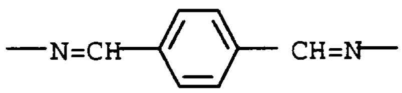 , 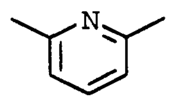

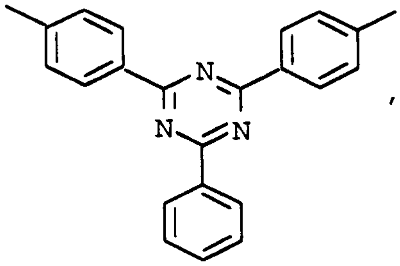 , 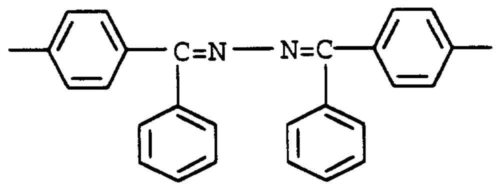

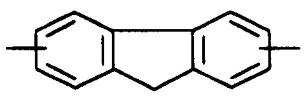 , 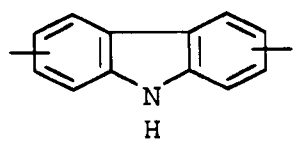

wobei

L[1] eine chemische Bindung, -N=N-, -CH=CH-, -O-, $-SO_2-$, -S-, -NH-CO-CO-NH- oder -CO-NH-NH-CO- und

$L^2$ eine chemische Bindung, 1,4- oder 1,3-Phenylen oder 1,5-Naphthylen bedeutet und die Benzol- und Naphthalinringe durch Halogen, Nitro, Sulfo, $C_1$-$C_6$-Alkyl und/oder $C_1$-$C_6$-Alkoxy substituiert sein können;

und die Ringe D' unabhängig voneinander durch Halogen, Nitro, Carboxy, Carbamoyl, $C_1$-$C_6$-Alkyl und/oder $C_1$-$C_6$-Alkoxy substituiert sein können.

**8.** Unsymmetrische Bisisoindolinpigmente der allgemeinen Formel I' nach Anspruch 7, in der

A',B' verschiedene Reste der Formel

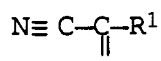

bedeuten,

L' für 1,4-Phenylen, 1,5-Phenylen oder 1,5-Naphthylen steht und

die Ringe D' keine Substituenten tragen.

**9.** Verwendung der Bisisoindolinpigmente der Formel I' gemäß Anspruch 7 oder 8 zum Pigmentieren von hochpolymeren organischen Materialien.